# EUROPÄISCHE PATENTSCHRIFT

(11) **EP 2 750 827 B1**
(45) Veröffentlichungstag und Bekanntmachung des Hinweises auf die Patenterteilung: **30.09.2015**
(21) Anmeldenummer: 12753088.9
(22) Anmeldetag: 09.08.2012
(51) Int. Cl.: B23Q 1/01, B23Q 1/26, B23Q 1/38

(54) **SCHLITTENFÜHRUNG FÜR EINEN MASCHINENSCHLITTEN EINER WERKZEUGMASCHINE**
SLIDE GUIDE FOR A MACHINE SLIDE OF A MACHINE TOOL
GLISSIÈRE POUR UN CHARIOT D'UNE MACHINE-OUTIL

(30) Priorität: 01.09.2011 DE 102011053181
(43) Veröffentlichungstag der Anmeldung: 09.07.2014
(73) Patentinhaber: Union Werkzeugmaschinen GmbH Chemnitz, 09116 Chemnitz (DE)
(72) Erfinder: SCHÄFER, Guntram, 09366 Niederdorf (DE); RICHTER, Reinhard, 09123 Chemnitz (DE)
(74) Vertreter: Bauer, Steffen
(86) Internationale Anmeldenummer: PCT/EP2012/065587
(87) Internationale Veröffentlichungsnummer: WO 2013/029953

(56) Entgegenhaltungen:
- DE-A1- 2 817 180
- DE-U- 6 609 861
- GB-A- 1 140 151
- GB-A- 2 133 930

## Beschreibung

Werkzeugmaschinen verfügen über ein Maschinenbett, auf dem wenigstens ein Bearbeitungsschlitten gleitfähig angeordnet ist. Zur Übertragung der Bearbeitungskräfte ist der Bearbeitungsschlitten über Schlittenführungen mit dem Maschinenbett verbunden. Eine derartige Schlittenführung ist Gegenstand der Erfindung.

Die Schlittenführung soll den am Werkzeug entstehenden Bearbeitungskräften entgegen wirkend die toleranzgerechte Ausführung des Bearbeitungsprozesses gewährleisten. Neben Wälzführungen kommen Gleitführungen und hydrostatische Führungen zum Einsatz. Indem die Bearbeitungskräfte in verschiedenen Richtungen auftreten, müssen die Schlittenführungen das Ausweichen der Maschinenschlitten in allen unerwünschten Freiheitsgraden verhindern. Zur Aufnahme abhebender Kräfte finden Unter- oder Umgriffe Verwendung. Eine Werkzeugmaschine mit einem linear geführten Schlitten eines Spindelstocks ist aus der DE 39 25 642 A1 bekannt. Danach ist am Maschinenbett eine Führungsschiene und am Schlitten ein formschlüssig auf der Führungsschiene laufender Schuh vorgesehen, die mit ebenen Gleitflächen aneinander liegen. Die Führungsschiene weist einen schmaleren unteren Abschnitt sowie einen breiteren oberen Abschnitt auf, der seitlich mit einem Vorsprung über den unteren Abschnitt vorsteht. Der Schuh ist in einer Horizontalebene zweigeteilt und als Untergriff an dem Vorsprung mit einem Oberteil an dessen Oberseite sowie mit einem Unterteil an dessen Unterseite geführt. Der Schuh ist lösbar an dem Schlitten befestigt, die Führungsschiene ist lösbar mit dem Maschinenbett verbunden. Daraus ergibt sich eine einfache Austauschbarkeit der Führungselemente, wenn diese beschädigt oder verschlissen sind. Eine bevorzugte Weiterbildung der bekannten Lösung besteht darin, dass mehrere Schuhe in Richtung der Führungsschiene hintereinander angeordnet sind und das Maschinenbett mit zwei parallelen Führungsschienen ausgestattet ist, so dass zwei mal n Schuhe die Führungsschienen umgreifen und derart relativ kleine Schuhe verwendet werden können, um die Bearbeitungskräfte hinreichend aufzunehmen. Die aneinander gleitenden Flächen des Schuhs bzw. der Schuhe und der Führungsschiene sind wegen der erforderlichen Maßhaltigkeit hochgenau bearbeitet. Insbesondere die bevorzugte Weiterbildung der bekannten Lösung birgt jedoch wegen der erforderlichen Ausrichtungsgenauigkeit der einzelnen Schuhe einen hohen Aufwand für die Einstellung der Führungselemente, so dass die Lösung nicht uneingeschränkt vorteilhaft ist. GB-2133930 offenbart eine Schlittenführung nach dem Oberbegriff des Anspruchs 1.

Daraus ergibt sich als Aufgabe der Erfindung, die Führung von Werkzeugschlitten an Maschinenbetten zu verbessern und den Aufwand für die Schlittenführung zu verringern.

Die Aufgabe wird erfindungsgemäß durch eine Schlittenführung für einen linear gleitfähig auf einem Maschinenbett einer Werkzeugmaschine angeordneten Maschinenschlitten nach Patentanspruch 1 gelöst. Die Schlittenführung umfasst wenigstens zwei Tragführungen und eine Längsführung, wobei zwischen den Tragführungen eine Führungsschiene angeordnet ist. Die Führungsschiene besteht aus einer in Längsrichtung des Maschinenbettes verlaufenden Rippe, die in einem Bett-Mittelteil senkrecht zu diesem aufragend angeordnet ist und über einen an der nach oben weisenden Oberfläche lösbar befestigten und in Querrichtung einseitig überragenden Vorsprung verfügt. Der Vorsprung ist als Teil eines Linearantriebs ausgebildet. Der Maschinenschlitten verfügt über einen in den Zwischenraum zwischen dem Vorsprung der Führungsschiene und dem Mittelteil des Maschinenbettes ragenden Untergriff. Eine bevorzugte Ausbildung der Erfindung besteht darin, dass der Vorsprung der Führungsschiene als Zahnstange ausgeführt ist. Weitergebildet wird die Erfindung, indem wenigstens ein Bett-Mittelteil zur Rückführung von Schmiermitteln wie Hydrostatikflüssigkeit oder dgl. ausgebildet ist und einen Anschluss an einen entsprechenden Versorgungskreislauf aufweist.

Die Erfindung wird im Folgenden in Form eines bevorzugten Ausführungsbeispiels anhand der Zeichnung näher erläutert. Die Zeichnung zeigt in
Fig. 1 eine perspektivische Ansicht einer erfindungsgemäßen Schlittenführung und
Fig. 2 einen Querschnitt entlang A-A gemäß Fig. 1.

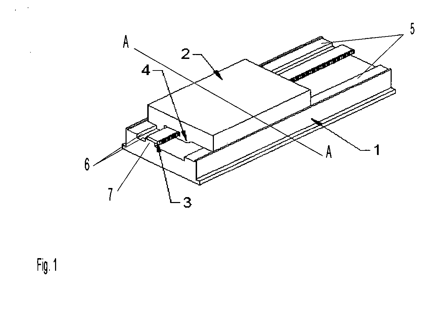

Die Ansicht einer erfindungsgemäßen Schlittenführung ist in Fig. 1 dargestellt. Ein Bettschlitten 2 ist auf einem Maschinenbett 1 einer Werkzeugmaschine linear gleitfähig gelagert. Vorzugsweise handelt es sich um eine hydrostatische Führung mit seitlich angeordneten parallelen Tragführungen 5 und Längsführungen 6. Zur Aufnahme abhebender Bearbeitungskräfte wird die Führung durch eine im Bett-Mittelteil angeordnete Untergriffführung mit einer senkrecht aus dem Maschinenbett 1 aufragenden Längsrippe 7 mit einem als Zahnstange 3 ausgebildeten Vorsprung und einem unter die Zahnstange 3 greifenden Untergriff 4 des Bettschlittens 2 vervollständigt. Der Bett-Mittelteil verfügt vorteilhaft über eine Einsenkung nach Art einer Rinne oder Mulde in Längsrichtung, die ein geringfügiges Gefälle aufweist und an ihrem tiefsten Punkt an eine Rückführleitung für das Hydrostatiköl angeschlossen ist. Die Einsenkung ist zeichnerisch nicht dargestellt, da sie für den Fachmann ohne weiteres vorstellbar ist. In gleicher Weise wird die Längsführungsnut genutzt, indem sie auch mit einer Gefälleeinsenkung ausgestattet sein kann und an eine Ölrückführleitung angeschlossen ist, so dass außerhalb der Tragführungen 5 angeordnete spezielle Sammel- und Rückführrinnen für das Hydrostatiköl entfallen.

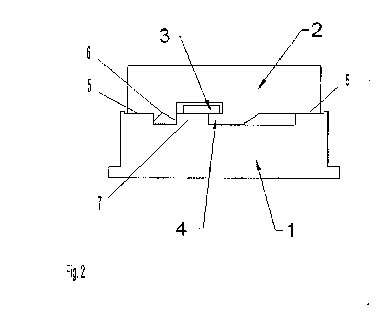

Die Schnittdarstellung gemäß Fig. 2 entlang der Linie A-A der Fig. 1 verdeutlicht, dass die Zahnstange 3 lösbar auf der Führungsschiene 7 befestigt ist, die senkrecht aufstehend mit dem Maschinenbett 1 verbunden ist, wodurch der Austausch aufgrund Verschleißes oder aus technologischen Gründen einfach realisierbar ist. Die erfindungsgemäße Schlittenführung reduziert den Herstellungsaufwand, indem beispielsweise die aufwendige Bearbeitung von außen liegenden Untergriffen entfällt. Die Auflagefläche der die Zahnstange 3 tragenden Führungsschiene 7 hingegen ist leicht bearbeitbar, ebenso wie die Unterseite der Zahnstange 3 selbst vor der Montage.

## Patentansprüche

1. Schlittenführung eines Maschinenschlittens (2) einer Werkzeugmaschine, der auf einem Maschinenbett (1) der Werkzeugmaschine linear gleitfähig angeordnet ist, welches wenigstens zwei Tragführungen (5) und eine Längsführung (6) aufweist, wobei zwischen den Tragführungen (5) eine Führungsschiene angeordnet ist, die aus einer in einem Bett-Mittelteil in Längsrichtung des Maschinenbettes (1) verlaufenden, senkrecht zu diesem aufragenden Rippe (7) mit einem an deren dem Maschinenbett (1) abgewandten Oberfläche in Querrichtung einseitig überragenden Vorsprung (3) besteht, **dadurch gekennzeichnet, dass** der Vorsprung (3) an dieser Oberfläche lösbar befestigt ist und als Teil eines Linearantriebs ausgebildet ist, und der Maschinenschlitten (2) über einen in den Zwischenraum zwischen dem Vorsprung (3) der Führungsschiene (7) und dem Mittelteil des Maschinenbettes (1) ragenden Untergriff (4) verfügt.

2. Schlittenführung nach Anspruch 1, **dadurch gekennzeichnet, dass** der Vorsprung (3) der Führungsschiene (7) als Zahnstange ausgebildet ist.

3. Schlittenführung nach Anspruch 1 oder 2, **dadurch gekennzeichnet, dass** wenigstens ein Bett-Mittelteil zur Rückführung von Schmiermitteln wie Hydrostatikflüssigkeit oder dgl. ausgebildet ist und einen Anschluss an einen entsprechenden Versorgungskreislauf aufweist.

## Claims

1. Slide guide for a machine slide (2) of a machine tool, which machine slide is arranged in a linearly slideable manner on a machine bed (1) of the machine tool, which machine bed has at least two support guides (5) and one longitudinal guide (6), wherein a guide rail is arranged between the support guides (5) and consists of a rib (7) which extends in the longitudinal direction of the machine bed (1) in a central bed part, protrudes perpendicularly to this machine bed and has a projection (3) on its surface remote from the machine bed (1) that overhangs on one side in the transverse direction, **characterized in that** the projection (3) is releaseably fastened to this surface and is designed as part of a linear drive, and the machine slide (2) has an under-engagement portion (4) which projects into the gap between the projection (3) of the guide rail (7) and the central part of the machine bed (1).

2. Slide guide according to Claim 1, **characterized in that** the projection (3) of the guide rail (7) is designed as a toothed rack.

3. Slide guide according to Claim 1 or 2, **characterized in that** at least one central bed part is designed to return lubricants such as hydrostatic fluid or the like and has a connection to a corresponding supply circuit.

## Revendications

1. Glissière d'un chariot (2) d'une machine-outil, lequel est disposé de manière à pouvoir glisser linéairement sur un banc (1) de la machine-outil, lequel banc comprend au moins deux guides de support (5) et un guide longitudinal (6), un rail de guidage étant disposé entre les guides de support (5), lequel rail de guidage est constitué d'une nervure (7) s'étendant dans la direction longitudinale du banc de machine (1) dans une partie centrale de banc et se dressant perpendiculairement à celui-ci, laquelle nervure est pourvue d'une saillie (3) dépassant d'un côté dans la direction transversale sur sa surface opposée au banc de machine (1), **caractérisée en ce que** la saillie (3) est fixée de manière amovible sur cette surface et est réalisée en tant que partie d'un entraînement linéaire, et le chariot de machine (2) possède une prise par le dessous (4) faisant saillie dans l'espace intermédiaire entre la saillie (3) du rail de guidage (7) et la partie centrale du banc de machine (1).

2. Glissière selon la revendication 1, **caractérisée en ce que** la saillie (3) du rail de guidage (7) est réalisée sous forme de crémaillère.

3. Glissière selon la revendication 1 ou 2, **caractérisée en ce qu'**au moins une partie centrale de banc est réalisée pour la recirculation de lubrifiants tels que du liquide hydraulique ou similaire et comprend un raccordement à un circuit d'alimentation correspondant
